# EUROPÄISCHE PATENTSCHRIFT

(11) **EP 2 606 559 B1**
(45) Veröffentlichungstag und Bekanntmachung des Hinweises auf die Patenterteilung: **23.04.2014**
(21) Anmeldenummer: 11745765.5
(22) Anmeldetag: 16.08.2011
(51) Int. Cl.: H02K 3/50

(54) **KONTAKTEINRICHTUNG IN EINEM STATOR EINER ELEKTRISCHEN MASCHINE**
CONTACT DEVICE IN A STATOR OF AN ELECTRICAL MACHINE
DISPOSITIF DE MISE EN CONTACT ÉLECTRIQUE DANS UN STATOR DE MOTEUR ÉLECTRIQUE

(30) Priorität: 16.08.2010 DE 202010017081 U; 21.12.2010 DE 102010063726
(43) Veröffentlichungstag der Anmeldung: 26.06.2013
(73) Patentinhaber: Robert Bosch GmbH, 70442 Stuttgart (DE)
(72) Erfinder: MEYER, Christian, 76228 Karlsruhe-Wolfartsweier (DE)
(86) Internationale Anmeldenummer: PCT/EP2011/064066
(87) Internationale Veröffentlichungsnummer: WO 2012/022733

(56) Entgegenhaltungen:
- DE-A1- 19 842 170
- JP-A- 11 234 940
- US-A1- 2002 067 094
- US-A1- 2009 256 438

## Beschreibung

Die Erfindung bezieht sich auf eine Kontakteinrichtung in einem Stator einer elektrischen Maschine nach dem Oberbegriff des Anspruches 1.

### Stand der Technik

In der DE 10 2008 054 529 A1 wird ein als Innenläufer ausgebildeter Elektromotor beschrieben, an dessen Stator über den Umfang verteilt eine Mehrzahl von Spulen angeordnet sind, welche über eine stirnseitig auf den Stator aufgesetzte Kontakteinrichtung bestromt werden. Die Kontakteinrichtung besteht aus mehreren aufeinandergestapelten Einzelringen, die jeweils Träger von Schneidklemmen sind, über die der elektrische Kontakt zu den Spulen am Stator hergestellt wird. Die elektrisch leitenden Einzelringe sind voneinander durch Trennringe aus nicht-leitendem Material isoliert. Die axiale Dicke der Kontakteinrichtung bestimmt sich nach der Anzahl der aufeinandergestapelten Einzelringe einschließlich der zwischenliegenden Trennringe.

Aus der DE 198 42 170 A1 ist eine Kontakteinrichtung in einem Stator einer elektrischen Maschine bekannt, wobei die Kontakteinrichtung einen Kontaktträger mit randseitig eingebrachten Aufnahmeöffnungen aufweist, durch die Spulendraht der Spulen im Stator hindurchgeführt ist. Die Enden des Spulendrahts liegen an Kontaktlaschen an, über die die Bestromung der Spulen erfolgt. Die Aufnahmeöffnungen sind nach außen hin offen ausgebildet und schlitzförmig mit parallelen Wandungen ausgeführt. Im Bereich der radialen Außenkante besitzen die Aufnahmeöffnungen einen abgerundeten Kantenbereich, was das Einführen des Spulendrahts erleichtert.

Die JP 11-234940 A zeigt einen Ausschnitt eines Stators mit einer Anschlusseinrichtung zum elektrischen Anschluss des Spulendrahts. Der Spulendraht ist in zwei parallelen Halterungen mit einer Nut aufgenommen, wobei der Drahtabschnitt zwischen den beiden Halterungen von einer Kontaktlasche beaufschlagt wird.

### Offenbarung der Erfindung

Der Erfindung liegt die Aufgabe zu Grunde, mit einfachen konstruktiven Maßnahmen eine kompakt bauende elektrische Kontaktierung des Stators in einer elektrischen Maschine zu schaffen.

Diese Aufgabe wird erfindungsgemäß mit den Merkmalen des Anspruches 1 gelöst. Die Unteransprüche geben zweckmäßige Weiterbildungen an.

Die erfindungsgemäße Kontakteinrichtung kann in einem Stator einer elektrischen Maschine wie beispielsweise einem Generator oder einem Elektromotor eingesetzt werden. Bei der elektrischen Maschine handelt es sich beispielsweise um einen elektronisch kommutierten Synchronmotor. Derartige elektrische Maschinen können beispielsweise in Kraftfahrzeugen eingesetzt werden, unter anderem als Servomotoren in Lenksystemen oder als Antriebsmotoren bzw. Generatoren in Hybrid- oder Elektrofahrzeugen. Darüber hinaus kommen auch Anwendungen in Hilfsaggregaten in Fahrzeugen in Betracht, beispielsweise als Scheibenwischermotoren, Fensterhebermotoren oder Motoren zur Sitzverstellung. Möglich sind aber auch Anwendungen in weiteren technischen Gebieten, beispielsweise als Antriebsmotor in Fahrrädern oder in elektrisch betätigten Werkzeugmaschinen, insbesondere Handwerkzeugmaschinen.

Der Stator der elektrischen Maschine weist über den Umfang verteilt eine Mehrzahl von Spulen auf, welche über die stirnseitig aufzusetzende Kontakteinrichtung mit Strom versorgt werden. Die Kontakteinrichtung umfasst vorzugsweise einen einzigen ringförmigen Kontaktträger aus einem elektrisch isolierenden Material sowie elektrisch leitende Leitungsbahnen, die zur Kontaktierung des Wicklungs- bzw. Spulendrahtes der Spule dienen. An der Umfangsseite weist die Kontakteinrichtung über den Umfang verteilt mehrere randseitige, halboffene Aufnahmeöffnungen auf, die zur Aufnahme von Spulendraht dienen, welcher von den Spulen im Stator durch die Aufnahmeöffnungen im Kontaktträger hindurchgeführt wird und auf der dem Stator abgewandten Seite mit Kontaktlaschen in Kontakt steht, die mit den elektrisch leitenden Leitungsbahnen verbunden bzw. mit diesen einteilig ausgeführt sind. Die Aufnahmeöffnungen im Randbereich des Kontaktträgers besitzen einen sich radial nach außen erweiternden Querschnitt, der es erlaubt, Spulendrähte unterschiedlicher Stärke in die Aufnahmeöffnungen einzuführen und dort festzuklemmen. Der Kontaktträger (Verschalteplatte) kann somit als Gleichteil für unterschiedliche Spulendrahtstärken eingesetzt werden. Dies stellt eine signifikante Vereinfachung und Reduzierung des Herstellungsaufwandes bei der Herstellung von Kontaktträgern für unterschiedliche elektrische Maschinen dar.

Zugleich zeichnet sich die Kontakteinrichtung durch eine kompakte Bauweise aus. Da lediglich ein einzelner Kontaktträger aus dem isolierenden Material vorgesehen ist, welcher Träger der Leitungsbahnen einschließlich der Kontaktlaschen ist, ist in Achsrichtung nur eine verhältnismäßig geringe Dicke gegeben. Des Weiteren lässt sich die Kontakteinrichtung auf einfache Weise am Stator montieren. Der Kontaktträger ist Träger sämtlicher Leitungsbahnen der Kontakteinrichtung, so dass mit der Befestigung des Kontaktträgers an der Stirnseite des Stators alle für die Bestromung erforderlichen Bauteile an der elektrischen Maschine angeordnet sind.

Gemäß einer zweckmäßigen Ausführung weisen die Aufnahmeöffnungen einen dreieckförmigen Querschnitt auf, der sich radial nach außen erweitert. Die radial innen liegende Dreiecksspitze bildet den Grund der Aufnahmeöffnung, an dem der Spulendraht anliegt, sofern die Drahtstärke klein genug ist. Bei größeren Drahtstärken befindet sich der Spulendraht mit Abstand zum radial innen liegenden Grund der Aufnahmeöffnung, wobei auf Grund der dreieckförmigen Erweiterung der Spulendraht auch bei größeren Drahtstärken vollständig in der Aufnahmeöffnung aufgenommen ist und somit nicht über den Außenumfang des Kontaktträgers radial hinausragt. Der dreieckförmige Querschnitt hat darüber hinaus den Vorteil, dass keine Hinterschneidung gegeben ist, so dass der Spulendraht geradlinig radial von außen nach innen in die Aufnahmeöffnung eingesetzt werden kann.

Die Aufnahmeöffnung kann an ihrer radial innen liegenden Seite entweder auf Abstand zu einer der Kontaktlaschen liegen oder sich bis unmittelbar zu der Kontaktlasche erstrecken. Die mit den elektrischen Leitungsbahnen verbundenen Kontaktlaschen befinden sich auf der dem Stator abgewandten Stirnseite des Kontaktträgers und sind mit Leitungsbahnen verbunden, welche sich entweder auf der gleichen Stirnseite des Kontaktträgers oder auf der gegenüberliegenden Stirnseite des Kontaktträgers befinden. Sind Kontaktträger und Leitungsbahn auf unterschiedlichen Seiten des Kontaktträgers angeordnet, so erstreckt sich die Kontaktlasche durch den Kontaktträger hindurch, um die zugeordnete Leiterbahn zu kontaktieren. In diesem Fall ist in den Kontaktträgern eine Durchstecköffnung eingebracht, durch die sich die Kontaktlasche erstreckt. Die Aufnahmeöffnung für die Aufnahme des Spulendrahts kann sich radial bis zu dieser Durchstecköffnung erstrecken, was es ermöglicht, den Spulendraht ohne Umbiegung durch die Aufnahmeöffnung hindurchzuführen und in unmittelbaren Kontakt mit der Kontaktlasche treten zu lassen. Möglich ist aber auch eine Ausführung, bei der die Aufnahmeöffnung einen radialen Abstand zur Durchstecköffnung aufweist. Zweckmäßigerweise besitzen alle Aufnahmeöffnungen die gleiche Querschnittsgestalt, also beispielsweise Dreieckform mit sich radial nach außen erweiterndem Querschnitt. Gemäß einer alternativen Ausführung ist vorgesehen, dass mindestens zwei unterschiedliche Querschnittsformen vorgesehen sind, welche jedoch zweckmäßigerweise sämtlich einen sich radial nach außen erweiternden Querschnitt aufweisen und ohne Hinterschneidung ausgebildet sind.

Gemäß noch einer weiteren, vorteilhaften Ausführung ist vorgesehen, dass sämtliche Aufnahmeöffnungen die gleiche Querschnittsfläche aufweisen. Insbesondere in Kombination mit gleich Querschnittsform bzw. -gestalt ist über den Umfang des Kontaktträgers eine Vereinheitlichung der Aufnahmeöffnungen gegeben. Gemäß einer alternativen Ausführung ist vorgesehen, dass mindestens zwei unterschiedliche Querschnittsflächen für die Aufnahmeöffnungen vorgesehen sind, beispielsweise in der Art, dass alle Aufnahmeöffnungen zwar die gleiche Querschnittsgestalt aufweisen, jedoch mit unterschiedlicher radialer Erstreckung ausgebildet sind, wodurch sich die unterschiedliche Querschnittsfläche ergibt. In diesem Fall können die Spulendrähte der jeweiligen radialen Erstreckung der Aufnahmeöffnung entsprechend in Radialrichtung unterschiedlich weit eingeführt werden.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht eine Kontakteinrichtung, über die Spulen eines Stators einer elektrischen Maschine mit Strom versorgt werden, wobei die Kontakteinrichtung einen Kunststoff-Kontaktträger sowie elektrische Leitungsbahnen mit Kontaktlaschen aufweist und die Kontaktlaschen von Spulendraht kontaktiert werden, welcher durch randseitige Aufnahmeöffnungen im Kontaktträger geführt ist,
- Fig. 2: eine weitere perspektivische Ansicht der Kontakteinrichtung.

In den Figuren sind gleiche Bauteile mit gleichen Bezugszeichen versehen.

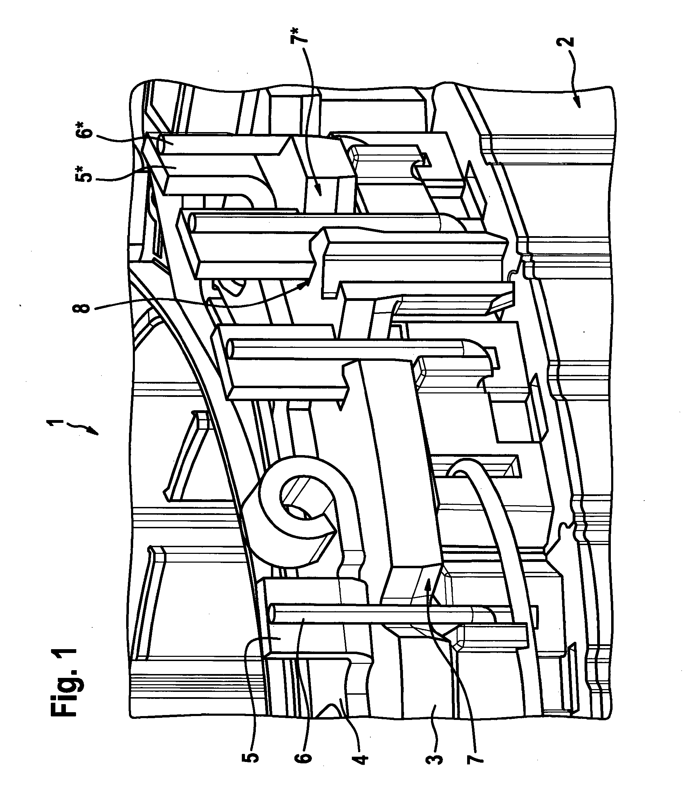

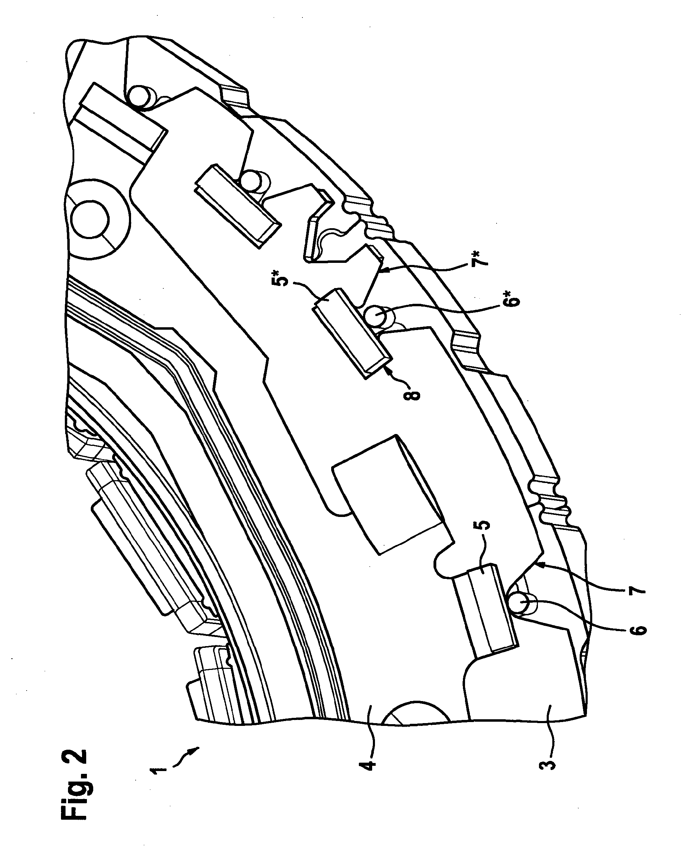

Die Figuren 1 und 2 zeigen eine Kontakteinrichtung 1 für eine elektrische Maschine, insbesondere einen elektrisch kommutierten Synchronmotor. Die Kontakteinrichtung 1 ist stirnseitig auf einen Stator 2 aufgesetzt und dient zur Stromversorgung von Spulen, die aus einem Spulendraht 6 gebildet sind, welcher auf Einzelzähne im Stator 2 gewickelt ist. Die Kontakteinrichtung 1 umfasst einen ringförmigen Kontaktträger 3 (Verschalteplatte), der aus einem elektrisch isolierenden Material besteht, vorzugsweise aus Kunststoff, und an beiden Stirnflächen elektrisch leitende Leitungsbahnen 4 zur Stromversorgung der Spulendrähte 6 aufweist. Die Kontaktierung zwischen den Leitungsbahnen 4 und den Spulendrähten 6 erfolgt über Kontaktlaschen 5, die einteilig mit den Leitungsbahnen 4 ausgebildet sind. Die Leitungsbahnen 4 sind über geeignete Befestigungsmaßnahmen mit dem ringförmigen Kontaktträger 3 verbunden, beispielsweise über umgeformte Befestigungselemente.

Um den Kontakt mit den Kontaktlaschen 5 herzustellen, sind die Spulendrähte 6 in Achsrichtung vom Stator 2 kommend durch Aufnahmeöffnungen 7 in dem Kontaktträger 3 bis zu der dem Stator 2 abgewandten Stirnseite am Kontaktträger geführt. Die Aufnahmeöffnungen 7 sind als randseitige, halboffene Öffnungen ausgeführt und befinden sich unmittelbar an der Umfangsseite des Kontaktträgers 3. Die Aufnahmeöffnungen 7 weisen einen dreieckförmigen Querschnitt mit sich radial nach außen erweiterndem Querschnitt auf. Im Bereich der Dreiecksspitze, welche radial nach innen weist, sind die Aufnahmeöffnungen 7 abgerundet ausgeführt. Der Radius der Dreiecksspitze kann an die kleinste Drahtstärke des einzuführenden Spulendrahts 6 angepasst sein. Bezüglich der Radialrichtung sind die Aufnahmeöffnungen konisch ausgebildet, derart, dass Spulendrähte mit unterschiedlichen Durchmessern aufgenommen und gegenüber der Kontaktlaschen justiert werden können. Die Spulendrähte 6 werden elektrisch leitend mit den Kontaktlaschen 5 verbunden, vorzugsweise mittels Schweißen, Löten oder Vercrimpen. Die Spulendrähte werden bevorzugt beim Biegeprozess auf ihre Endlänge abgeschnitten- insbesondere derart, dass sie etwa an den axialen Enden (von den Spulen abgewandten Enden) der Kontaktlaschen enden.

Über den Umfang verteilt sind eine Vielzahl von Aufnahmeöffnungen 7 am Kontaktträger 3 vorgesehen, die untereinander alle gleichartig ausgebildet sind und einen dreiecksförmigen Querschnitt aufweisen. Auch die Querschnittsfläche der Aufnahmeöffnungen 7 ist zweckmäßigerweise zumindest annähernd gleich groß. Die Kontaktlaschen 5, welche einteilig mit Leitungsbahnen 4 ausgebildet sind, erstrecken sich allesamt an der dem Stator 2 abgewandten Stirnseite des Kontaktträgers 3. Ein Teil der Kontaktlaschen 5 ist mit Leitungsbahnen 4 verbunden, welche sich ebenfalls an der dem Stator 2 abgewandten Stirnseite des Kontaktträgers 3 befinden. Die Aufnahmeöffnungen 7 sind jeweils den Kontaktlaschen 5 unmittelbar vorgelagert. Diejenigen Aufnahmeöffnungen 7, welche Kontaktlaschen 5 zugeordnet sind, die mit Leitungsbahnen an der gleichen Stirnseite verbunden sind, erstrecken sich zumindest annähernd in Radialrichtung bis zu den Kontaktlaschen 5.

Diejenigen Kontaktlaschen 5*, welche einteilig mit Leitungsbahnen ausgebildet sind, die auf der dem Stator 2 zugewandten Stirnseite des Kontaktträgers 3 verlaufen, sind durch Durchstecköffnungen 8 im Kontaktträger 3 hindurchgeführt. Der Spulendraht 6* ist durch Aufnahmeöffnungen 7* geführt, welche sich in Radialrichtung bis zu der Durchstecköffnung 8 erstrecken.

## Patentansprüche

1. Kontakteinrichtung in einem Stator einer elektrischen Maschine, insbesondere einem Stell- oder Antriebsmotor in Fahrzeugen, wobei die Kontakteinrichtung (1) eine Mehrzahl von über den Umfang angeordneter Spulen im Stator (2) elektrisch kontaktiert, wobei die Kontakteinrichtung (1) einen ringförmigen Kontaktträger (3) aus elektrisch isolierendem Material sowie elektrisch leitende Leitungsbahnen (4) mit Kontaktlaschen (5) zur Kontaktierung mit Spulendraht (6) aufweist, der durch randseitige, halboffene Aufnahmeöffnungen (7) im Kontaktträger (3) geführt ist, **dadurch gekennzeichnet, dass** die Aufnahmeöffnungen (7) einen sich radial nach außen erweiternden, dreieckförmigen Querschnitt zum Einführen und Festklemmen von Spulendrähten unterschiedlicher Stärke aufweisen.

2. Kontakteinrichtung nach Anspruch 1, **dadurch gekennzeichnet, dass** mindestens eine Aufnahmeöffnung (7) an ihrer radial innen liegenden Seite auf Abstand zu einer Kontaktlasche (5) liegt.

3. Kontakteinrichtung nach Anspruch 1, **dadurch gekennzeichnet, dass** mindestens eine Aufnahmeöffnung (7) sich radial nach innen bis zu einer Kontaktlasche (5) erstreckt.

4. Kontakteinrichtung nach Anspruch 3, **dadurch gekennzeichnet, dass** in den Kontaktträger (3) mindestens eine Durchstecköffnung (8) zur Aufnahme einer Kontaktlasche (5) eingebracht ist, wobei sich die Aufnahmeöffnung (7) radial bis zu der Durchstecköffnung (8) erstreckt.

5. Kontakteinrichtung nach einem der Ansprüche 1 bis 4, **dadurch gekennzeichnet, dass** sämtliche Aufnahmeöffnungen (7) die gleiche Querschnittsgestalt aufweisen.

6. Kontakteinrichtung nach einem der Ansprüche 1 bis 5, **dadurch gekennzeichnet, dass** sämtliche Aufnahmeöffnungen (7) die gleiche Querschnittsfläche aufweisen.

7. Stator einer elektrischen Maschine mit einer Kontakteinrichtung (1) nach einem der Ansprüche 1 bis 6, wobei an den Kontaktlaschen (5) die Spulendrähte (6) befestigt sind.

8. Elektrische Maschine, insbesondere Elektromotor mit einem Stator (2) nach Anspruch 7.

## Claims

1. Contact device in a stator of an electrical machine, in particular an actuating or drive motor in vehicles, wherein the contact device (1) makes electrical contact with a plurality of coils, which are arranged over the circumference, in the stator (2), wherein the contact device (1) has an annular contact support (3) which is composed of electrically insulating material and also has electrically conductive conductor tracks (4) with contact lugs (5) for making contact with coil wire (6) which is routed through half-open receiving openings (7) on the edge of the contact support (3), **characterized in that** the receiving openings (7) have a radially outwardly expanding, triangular cross section for introducing and firmly clamping coil wires of different thicknesses.

2. Contact device according to Claim 1, **characterized in that** at least one receiving opening (7), on its radially inner side, is situated at a distance from a contact lug (5).

3. Contact device according to Claim 1, **characterized in that** at least one receiving opening (7) extends radially inward as far as a contact lug (5).

4. Contact device according to Claim 3, **characterized in that** at least one passage opening (8) for receiving a contact lug (5) is made in the contact support (3), wherein the receiving opening (7) extends radially as far as the passage opening (8).

5. Contact device according to one of Claims 1 to 4, **characterized in that** all of the receiving openings (7) have the same cross-sectional shape.

6. Contact device according to one of Claims 1 to 5, **characterized in that** all of the receiving openings (7) have the same cross-sectional area.

7. Stator of an electrical machine, comprising a contact device (1) according to one of Claims 1 to 6, wherein the coil wires (6) are fastened to the contact lugs (5).

8. Electrical machine, in particular electric motor, comprising a stator (2) according to Claim 7.

## Revendications

1. Dispositif de mise en contact dans un stator de machine électrique, en particulier un moteur de commande ou d'entraînement dans des véhicules, le dispositif de mise en contact (1) mettant en contact électrique une pluralité de bobines dans le stator (2), disposées sur la périphérie, le dispositif de mise en contact (1) présentant un support de contacts annulaire (3) constitué de matériau électriquement isolant ainsi que de pistes conductrices (4) électriquement isolantes avec des pattes de contact (5) pour la mise en contact avec un fil de bobine (6) qui est guidé à travers des ouvertures de réception (7) marginales, à moitié ouvertes, dans le support de contacts (3), **caractérisé en ce que** les ouvertures de réception (7) présentent une section transversale triangulaire s'élargissant radialement vers l'extérieur, pour l'introduction et le serrage de fils de bobine de différentes épaisseurs.

2. Dispositif de mise en contact selon la revendication 1, **caractérisé en ce qu'**au moins une ouverture de réception (7) se situe au niveau de son côté radialement interne à distance d'une patte de contact (5).

3. Dispositif de mise en contact selon la revendication 1, **caractérisé en ce qu'** au moins une ouverture de réception (7) s'étend radialement vers l'intérieur jusqu'à une patte de contact (5).

4. Dispositif de mise en contact selon la revendication 3, **caractérisé en ce qu'**au moins une ouverture d'enfichage (8) pour recevoir une patte de contact (5) est pratiquée dans le support de contacts (3), l'ouverture de réception (7) s'étendant radialement jusqu'à l'ouverture d'enfichage (8).

5. Dispositif de mise en contact selon l'une quelconque des revendications 1 à 4, **caractérisé en ce que** toutes les ouvertures de réception (7) présentent la même configuration en section transversale.

6. Dispositif de mise en contact selon l'une quelconque des revendications 1 à 5, **caractérisé en ce que** toutes les ouvertures de réception (7) présentent la même surface en section transversale.

7. Stator de machine électrique comprenant un dispositif de mise en contact (1) selon l'une quelconque des revendications 1 à 6, dans lequel les fils de bobine (16) sont fixés aux pattes de contact (5).

8. Machine électrique, en particulier moteur électrique comprenant un stator (2) selon la revendication 7.
